# FASCICULE DE BREVET EUROPEEN

(11) **EP 1 395 070 B1**
(45) Date de publication et mention de la délivrance du brevet: **13.04.2011**
(21) Numéro de dépôt: 03291806.2
(22) Date de dépôt: 22.07.2003
(51) Int. Cl.: H04W 12/10

(54) **Procédé pour la protection d'intégrité de messages transmis dans un système de radiocommunications mobiles**
Verfahren zum Integritätsschutz von Nachrichten in einem mobilen Kommunikationssystem
Method for protecting the integrity of messages in a mobile communications system

(30) Priorité: 12.08.2002 FR 0210240
(43) Date de publication de la demande: 03.03.2004
(73) Titulaire: Alcatel Lucent, 75008 Paris (FR)
(72) Inventeur: Fischer, Patrick, 92370 Chaville (FR); Masuda, Hiroyo, Ryugasaki-city Ibaraki-prefecture (JP)
(74) Mandataire: El Manouni, Josiane

(56) Documents cités:
- WO-A-01/39534
- WO-A-01/63954
- ETSI: "Universal Mobile Telecommunications System (UMTS); 3G security; Security architecture (3GPP TS 33.102 version 5.0.0 Release 5)" ETSI TS 133 102 V5.0.0 (2002-06), juin 2002 (2002-06), pages 1-62, XP002238243 France
- ETSI: "Universal Mobile Telecommunications System (UMTS); Radio Resource Control (RRC) protocol specification (3GPP TS 25.331 version 5.1.0 Release 5)" ETSI TS 125 331 V5.1.0 (2002-06), juin 2002 (2002-06), pages 204-219, XP002238244 France

## Description

La présente invention concerne d'une manière générale les systèmes de radiocommunications mobiles.

La présente invention est notamment applicable aux systèmes de radiocomunications mobiles de troisième génération, notamment de type UMTS (« Universal Mobile Telecommunication System »).

D'une manière générale, les systèmes de radiocommunications mobiles font l'objet de normalisation, et pour plus d'informations on pourra se référer aux normes correspondantes, publiées par les organismes de normalisation correspondants.

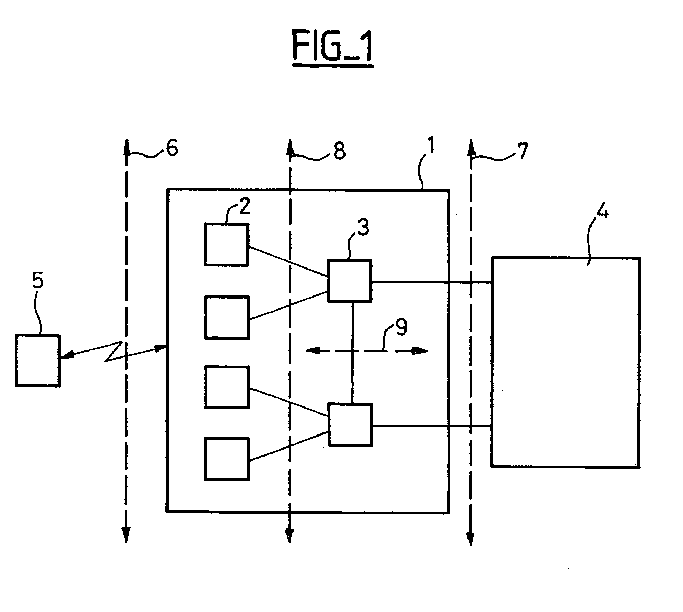

L'architecture générale de ces systèmes est rappelée sur la figure 1, elle comporte essentiellement :
- un réseau d'accès radio 1, ou RAN (pour « Radio Access Network »),
- un réseau coeur 4, ou CN (pour « Core Network»).

Le RAN est formé de stations de base telles que 2 et de contrôleurs de stations de base tels que 3. Le RAN est en relation d'une part avec des terminaux mobiles tels que 5, via une interface 6 appelée aussi interface radio, et d'autre part avec le CN 4 via une interface 7. A l'intérieur du RAN, les stations de base communiquent avec les contrôleurs de stations de base via une interface 8.

Dans les systèmes de type UMTS, le RAN est appelé UTRAN ("UMTS Terrestrial Radio Access Network »), les stations de base sont appelées « Node B », les contrôleurs de stations de base sont appelés RNC ("Radio Network Controller"), et les terminaux mobiles sont appelés UE (« User Equipment »). L'interface radio 6 est appelée « interface Uu », l'interface 7 est appelée « interface lu », l'interface 8 est appelée « interface lub », et une interface 9 entre RNCs, appelée « interface lur», peut en outre être prévue.

Pour un Node B donné, le RNC qui le contrôle est aussi appelé CRNC (pour «Controlling Radio Network Controller »). Le CRNC a un rôle de contrôle de charge et d'allocation de ressources radio pour les Node B qu'il contrôle. Pour une communication donnée relative à un UE donné, il existe un RNC, appelé SRNC (pour «Serving Radio Network Controller») ayant un rôle de contrôle pour la communication considérée. Dans le cas de transmission en macro-diversité (ou «soft-handover » en anglais) un Node B connecté à l'UE mais non contrôlé par le SRNC communique avec le SRNC via le RNC qui le contrôle, appelé aussi DRNC (pour « Drift RNC »), via l'interface « lur ».

Dans un système de type UMTS, notamment, il est prévu une fonction de protection d'intégrité (ou « integrity protection » en anglais) de certaines informations transmises sur l'interface radio, en l'occurrence des informations de signalisation échangées dans le cadre de protocoles de gestion de mobilité, de gestion d'appels, de gestion de sessions, ...etc. De telles informations sont transmises sur l'interface radio dans des messages, appelés messages RRC, définis selon le protocole de signalisation entre SRNC et UE, ou protocole RRC (« Radio Resource Control »).

Pour une description du protocole RRC et de cette fonction de protection d'intégrité, on pourra se référer notamment aux spécifications 3G TS 25.331 et 3G TS 33.102 publiées par le 3GPP («3^{rd} Generation Partnership Project»). On rappelle brièvement les mécanismes utilisés pour la protection d'intégrité de messages échangés entre un émetteur (en l'occurrence UE dans le sens montant, ou SRNC dans le sens descendant) et un récepteur (en l'occurrence SRNC dans le sens montant, ou UE dans le sens descendant):
- pour chaque message à transmettre, l'émetteur calcule un code appelé code d'authentification de message, ou MAC-I (« Message Authentication Code »), en utilisant un algorithme de protection d'intégrité dit algorithme UIA (pour « UMTS Integrity Algorithm ») et des paramètres d'entrée de cet algorithme, puis l'émetteur insère le code MAC-I ainsi calculé dans le message à transmettre,
- pour chaque message reçu, le récepteur re-calcule le code MAC-I en utilisant le même algorithme et les mêmes paramètres d'entrée que l'émetteur, puis le récepteur compare le code ainsi re-calculé au code reçu, et si les deux codes se correspondent, le récepteur considère que le message reçu est intact et a bien été transmis par cet émetteur.

Les paramètres d'entrée de l'algorithme incluent un paramètre secret et des paramètres publics. Le paramètre secret est aussi appelé clé d'intégrité (ou «IK», pour « Integrity Key »). Les paramètres publics incluent notamment :
- une valeur pseudo-aléatoire (correspondant à un paramètre appelé « FRESH » ),
- un numéro de séquence (correspondant à un paramètre appelé «COUNT-I»),
- le message à transmettre (correspondant à un paramètre appelé « MESSAGE »),
- l'identité de support radio ou RB (« Radio Bearer») sur lequel le message est transmis (correspondant à un paramètre noté RB Id).

Le numéro de séquence COUNT-I inclut un numéro de séquence RRC, ou RRC SN (« RRC Sequence Number) et un numéro d'hypertrame RRC, ou RRC HFN (« RRC Hyper Frame Number »).

D'une manière générale, des formats de messages normalisés sont utilisés sur des interfaces ouvertes telles que notamment l'interface Uu pour les messages RRC. Ainsi, à partir des différentes informations à transmettre dans un message, appelées aussi IE («Information Elément»), une séquence de bits à transmettre est obtenue en suivant des règles de codage selon une syntaxe dite syntaxe abstraite, telle que notamment l'ASN.1 (« Abstract Syntax Notation 1 »), permettant de définir une structure de données pour les informations à transmettre, et une syntaxe dite syntaxe de transfert, permettant de faire en sorte que des données reçues sous forme d'un flux d'octets ou de bits soient correctement reconnues en réception. Pour plus de détails sur ce codage, par exemple pour la transmission de messages RRC sur l'interface Uu, on pourra se référer notamment à la spécification 3G TS 25.331.

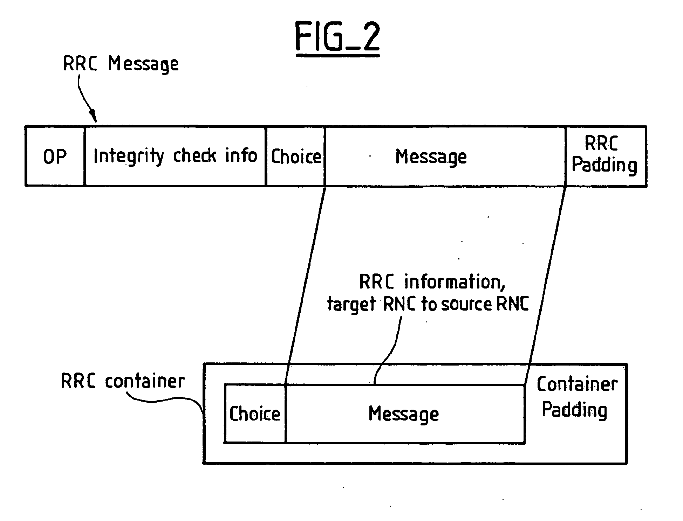

Comme rappelé sur la figure 2, la séquence de bits notée « RRC Message » correspondant à un message RRC transmis sur l'interface Uu comporte:
- un bit noté OP indiquant s'il s'agit d'un message dont l'intégrité est protégée,
- s'il s'agit d'un message dont l'intégrité est protégée, une séquence de bits notée « Integrity Check Info » correspondant à un IE appelé «Integrity check info»,
- des bits notés « Choice », permettant au récepteur de savoir, parmi les différents messages RRC possibles pouvant être transmis, lequel est en l'occurrence transmis,
- une séquence de bits utiles, notée « message », correspondant à des éléments d'information IE utiles,
- éventuellement des bits de bourrage, ou «padding», notés «RRC padding », afin que la longueur totale de la séquence transmise soit un multiple de 8 bits.

On rappelle que l'IE « Integrity check info» contient :
- un IE appelé « Message Authentication Code » qui correspond au MAC-I calculé en émission,
- un IE appelé «RRC message sequence number » correspondant au RRC

SN utilisé à l'émission pour ce message.

Le RRC SN est incrémenté à chaque transmission d'un message protégé, et l'IE « RRC message sequence number» est utilisé en réception notamment pour mettre à jour le RRC HFN à chaque nouveau cycle RRC SN.

D'une manière générale, des procédures sont prévues, par lesquelles le réseau communique à l'UE des paramètres de calcul du MAC-I (tels que notamment le type d'algorithme et la valeur pseudo-aléatoire FRESH).

En cours de communication, le rôle de SRNC pour cette communication peut être transféré d'un RNC dit SRNC source (ou « source SRNC » en anglais) à un RNC dit SRNC cible (ou « target SRNC » en anglais), pour diverses raisons telles que notamment: optimisation des temps de transfert, optimisation d'allocation de ressources, optimisation de charge relative des différents RNC, ...etc. Un tel transfert est effectué selon une procédure dite de « relocation» (en anglais). On distingue deux types de « relocation »:
- la « relocation » dans laquelle l'UE n'est pas impliqué (en anglais « UE not involved »): correspondant typiquement au cas où le SRNC cible avait précédemment un rôle de DRNC,
- la « relocation » dans laquelle l'UE est impliqué (en anglais « UE involved »): correspondant typiquement au cas où le SRNC cible n'avait pas précédemment un rôle de DRNC.

D'une manière générale, dans le cas de « relocation » dans lequel l'UE est impliqué, des procédures sont prévues, par lesquelles le réseau communique à l'UE, alors qu'il est encore sous le contrôle du SRNC source, différents paramètres à utiliser lorsqu'il sera sous le contrôle du SRNC cible, tels que des paramètres relatifs à des nouvelles ressources radio à utiliser, et si necessaire des nouveaux paramètres de calcul du MAC-I (tels que notamment une nouvelle valeur pseudo-aléatoire FRESH, et éventuellement un nouveau type d'algorithme ).

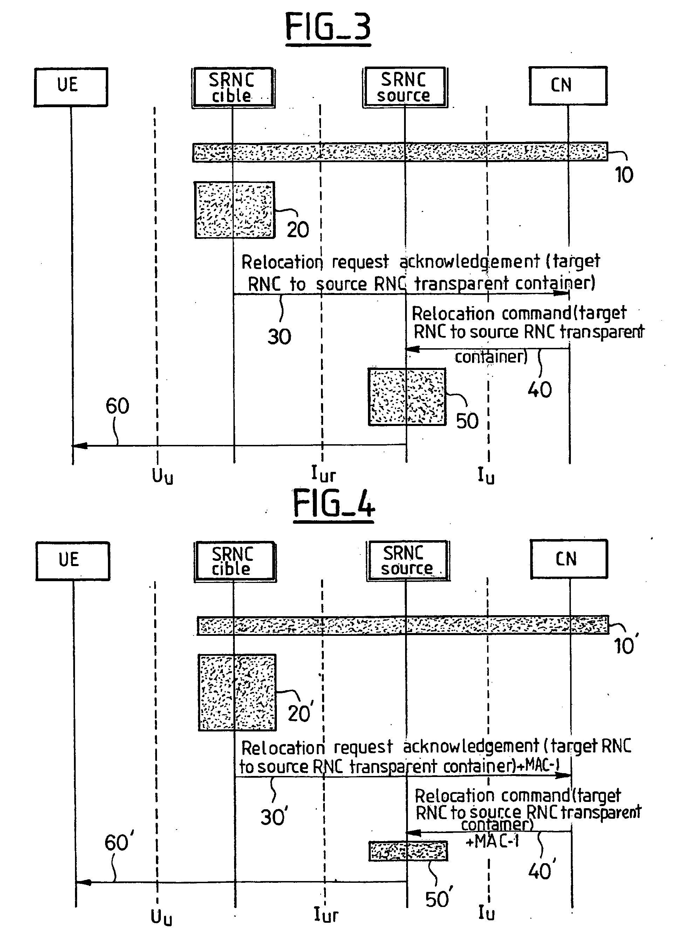

Dans l'état actuel de la norme, de telles procédures sont rappelées en relation avec la figure 3.

Une étape notée 10 indique qu'une procédure de «relocation» est commencée. Cette procédure de «relocation» comporte des échanges de signalisation entre SRNC source, SRNC cible, CN et UE, comme défini notamment dans les spécifications 3G TS 25.413 et 3G TS 25.331 publiées par le 3GPP. La spécification 3G TS 25.413 est relative au protocole de signalisation RANAP (« Radio Access Network Application Part») applicable sur l'interface lu. La spécification 3G TS 25.331 est, comme rappelé précédemment, relative au protocole de signalisation RRC (« Radio Resource Control») applicable sur l'interface Uu.

Dans une étape notée 20, le SRNC cible créée des informations appelées informations RRC. L'unité d'informations correspondante créée par le SRNC cible est appelée « RRC information, target RNC to source RNC » (ou plus simplement dans ce qui suit unité d'informations RRC). Une unité d'informations RRC est destinée à être transmise dans des messages autres que des messages sur l'interface Uu, par exemple des messages sur l'interface lu, ou messages RANAP, par exemple les messages « RELOCATION REQUEST ACKNOWLEDGE », « RELOCATION COMMAND ». Ces messages RANAP contiennent un IE correspondant à un conteneur d'informations appelé «Target RNC to source RNC transparent container », qui contient lui-même un IE correspondant à un conteneur d'informations appelé « RRC container », qui contient lui-même l'unité d'informations « RRC information, target RNC to source RNC ». Des informations RRC créées par le SRNC cible sont ainsi transférées au SRNC source, qui les re-transmet à l'UE, sur l'interface Uu, dans un message RRC. Un tel message RRC peut être notamment un des messages suivants: RADIO BEARER SETUP, RADIO BEARER RECONFIGURATION, RADIO BEARER RELEASE, TRANSPORT CHANNEL RECONFIGURATION, PHYSICAL CHANNEL RECONFIGURATION.

L'unité d'informations RRC créée par le SRNC cible inclut notamment un IE appelé « Integrity protection mode info », qui peut inclure lui-même notamment des paramètres de calcul du MAC-I (tels que le type d'algorithme, et la valeur pseudo-aléatoire « FRESH »).

Un codage basé sur l'ASN.1 est également utilisé, et, en résultat de ce codage, comme illustré sur la figure 2:
- Une séquence de bits notée «RRC information, target RNC to source RNC», correspondant à une unité d'informations «RRC information, target RNC to source RNC » contient :
   - des bits notés « choice » permettant au récepteur de savoir, parmi les différents messages RRC correspondants possibles, lequel est en l'occurrence utilisé,
   - une séquence de bits notée « message » correspondant à des IE utiles,
- une séquence de bits notée « RRC container » contient:
   - une séquence de bits correspondant à la séquence « RRC information, target RNC to source RNC »,
   - éventuellement des bits de bourrage, notés « Container padding », afin que le nombre de bits de la séquence « RRC container » (définie, selon les règles de codage utilisées, comme une chaîne d'octets ou « OCTET STRING ») soit un multiple de 8 bits.

Une étape notée 30 correspond à l'envoi par le SRNC cible vers le CN, d'un message «RELOCATION REQUEST ACKNOWLEDGE». Ce message contient notamment un IE appelé «Target RNC to Source RNC Transparent Container », contenant lui-même un conteneur RRC (ou « RRC container»). Ce conteneur RRC contient lui-même, en l'occurrence, une unité d' informations RRC créée dans l'étape 20.

Une étape notée 40 correspond à l'envoi par le CN vers le SRNC source d'un message « RELOCATION COMMAND ». Ce message contient l'IE « Target RNC to Source RNC Transparent Container » reçu par le CN du SRNC cible.

Dans les étapes 30 et 40 l'unité d'informations RRC créée dans l'étape 20 est ainsi transférée de manière transparente du SRNC cible au SRNC source via le réseau coeur.

Dans une étape notée 50, le SRNC source décode l'unité d'informations RRC reçue, afin notamment de verifier si des nouveaux paramètres de calcul du MAC-I sont transmis. Sur la base des paramètres de calcul du MAC-I, le SRNC source calcule le MAC-I destiné à être inséré dans ce message, pour la protection de son intégrité, pour sa transmission à l'UE sur l'interface Uu .

En effet, dans l'état actuel de la norme, et comme illustré sur la figure 2, la séquence notée « message » de l'unité d'informations RRC codée correspond à la séquence notée « message » d'un message RRC codé, et par conséquent le SRNC source doit calculer le MAC-I afin de constituer la séquence « Integrity check info » du message RRC codé. Dans l'étape 50, après avoir ainsi calculé le MAC-I, le SRNC source constitue la séquence de bits correspondant au message RRC codé à transmettre vers l'UE sur l'interface Uu (telle que rappelée sur la figure 2).

Une étape notée 60 correspond à l'envoi, par le SRNC source vers l'UE, du message RRC ainsi obtenu.

Ainsi que l'a observé le demandeur, un tel procédé a notamment les inconvénients suivants:
- il est nécessaire que le SRNC source décode l'unité d'informations RRC pour verifier les paramètres de calcul du MAC-I, puis calcule le MAC-I sur la base de ces paramètres, ce qui a pour inconvénient d'augmenter la quantité et la complexité des traitements dans le SRNC source,
- il est nécessaire que le SRNC source soit capable d'implémenter le type d'algorithme choisi par le SRNC cible, ou encore ceci ne permet pas au SRNC cible de choisir un type d'algorithme autre que celui implémenté dans le SRNC source, ou en d'autres termes ceci a pour inconvénient d'être relativement contraignant ou de manquer de souplesse,
- il est nécessaire que le SRNC cible utilise, pour le transfert des informations RRC dans des messages RANAP, un format connu du SRNC source, ou encore ceci ne permet pas au SRNC cible de choisir un format autre que celui connu du SRNC source, ou en d'autres termes ceci a encore pour inconvénient d'être relativement contraignant ou de manquer de souplesse (par exemple dans le cas où une nouvelle version de protocole a été spécifiée, mais où l'un de ces deux SRNC utilise la nouvelle version et l'autre l'ancienne version).

En d'autres termes, dans l'état actuel de la norme, plusieurs conditions doivent être vérifiées entre le SRNC source et le SRNC cible :
- le SRNC source doit pouvoir décoder tous les messages qui peuvent être envoyés, via le CN, du SRNC cible,
- le SRNC source doit connaître toutes les extensions optionnelles que le SRNC cible peut inclure dans le message,
- le SRNC source doit supporter une version de message que le SRNC cible utilise,
- le SRNC source doit supporter le mécanisme de protection d'intégrité que le SRNC cible a choisi.

La présente invention a notamment pour but d'éviter tout ou partie de ces inconvénients. Plus généralement, la présente invention a pour but d'optimiser la mise en oeuvre des procédures de protection d'intégrité dans ces systèmes, notamment dans le cas de « relocation » dans lequel l'UE est impliqué.

Un des objets de la présente invention est un procédé pour la protection d'intégrité de messages transmis entre un terminal mobile et un contrôleur de réseau d'accès radio serveur dans un système de radiocommunications mobiles, procédé dans lequel un message transmis est protégé au moyen d'un code calculé en émission, procédé dans lequel, dans le cas de changement de contrôleur de réseau d'accès radio serveur, d'un contrôleur dit contrôleur source, vers un contrôleur dit contrôleur cible, un message transmis au terminal mobile par le contrôleur source, et destiné à re-transmettre au terminal mobile des informations créées dans le contrôleur cible puis transférées par le contrôleur cible au contrôleur source, est protégé au moyen d'un code calculé dans le contrôleur cible.

Suivant une autre caractéristique, des informations additionnelles sont créées dans le contrôleur cible puis transférées du contrôleur cible vers le contrôleur source.

Suivant une autre caractéristique, lesdites informations additionnelles incluent des informations additionnelles relatives au code calculé par le contrôleur cible.

Suivant une autre caractéristique, lesdites informations additionnelles incluent des informations additionnelles destinées à permettre que les opérations de constitution de message par le contrôleur source et de calcul de code par le contrôleur cible soient cohérentes.

Suivant une autre caractéristique, lesdites informations additionnelles incluent des informations additionnelles destinées à permettre au contrôleur source de déterminer la taille d'une séquence de bits reçue du contrôleur cible et correspondant auxdites informations créées par le contrôleur cible.

Suivant une autre caractéristique, lesdites informations additionnelles indiquent la quantité de bourrage nécessaire pour transférer ladite séquence de bits dans un conteneur d'informations de taille donnée.

Suivant une autre caractéristique, lesdites informations additionnelles incluent des informations additionnelles destinées à permettre que l'identité du support radio utilisée par le contrôleur cible pour le calcul dudit code corresponde à l'identité du support radio utilisé par le contrôleur source pour transmettre ledit message au terminal mobile.

Suivant une autre caractéristique, lesdites informations additionnelles incluent des informations additionnelles destinées à permettre qu'un numéro de séquence contenu dans le message transmis au terminal mobile corresponde au numéro de séquence utilisé par le contrôleur cible pour calculer ledit code.

Suivant une autre caractéristique, lesdites informations additionnelles sont transférées du contrôleur cible vers le contrôleur source dans une même unité d'informations que lesdites informations créées par le contrôleur cible.

Suivant une autre caractéristique, lesdites informations additionnelles sont transférées du contrôleur cible au contrôleur source dans un conteneur d'informations, dit premier conteneur d'informations, incluant ladite unité d'informations.

Suivant une autre caractéristique, lesdites informations additionnelles sont transférées du contrôleur cible au contrôleur source dans un conteneur d'informations, dit deuxième conteneur d'informations, incluant ledit premier conteneur d'informations.

Suivant une autre caractéristique, lesdites informations additionnelles sont transférées du contrôleur cible au contrôleur source dans un message transmis entre contrôleur cible et réseau coeur, puis dans un message transmis entre réseau coeur et contrôleur source, ces messages incluant ledit deuxième conteneur d'informations.

Suivant une autre caractéristique, ledit message transmis du contrôleur source au terminal mobile corresond à un message RRC (« Radio Resource Control »).

Suivant une autre caractéristique, ladite unité d'informations correspond à une unité d'informations appelée « RRC information, target RNC to source RNC».

Suivant une autre caractéristique, ledit premier conteneur d'informations correspond à un conteneur d'informations appelé « RRC container ».

Suivant une autre caractéristique, ledit deuxième conteneur d'informations correspond à un conteneur d'informations appelé « Target RNC to Source RNC Transparent Container ».

Suivant une autre caractéristique, lesdits messages incluant ledit deuxième conteneur d'informations correspondent à des messages RANAP (« Radio Access Network Application Part »).

Suivant une autre caractéristique, lesdites informations sont destinées à communiquer au terminal mobile différents paramètres à utiliser sous le contrôle du contrôleur cible.

Suivant une autre caractéristique, ledit message RRC est un des messages : RADIO BEARER SETUP, RADIO BEARER RECONFIGURATION, RADIO BEARER RELEASE, TRANSPORT CHANNEL RECONFIGURATION, PHYSICAL CHANNEL RECONFIGURATION.

Suivant une autre caractéristique, ledit message RANAP transmis entre contrôleur cible et réseau coeur est un message RELOCATION REQUEST ACKNOWLEDGE.

Suivant une autre caractéristique, ledit message RANAP transmis entre réseau coeur et contrôleur source est un message RELOCATION COMMAND.

Suivant une autre caractéristique, ledit code est un code d'authentification de message, ou MAC-I (« Message Authentication Code »).

Suivant une autre caractéristique, dans le cas de changement de contrôleur de réseau d'accès radio serveur, dudit contrôleur source vers ledit contrôleur cible, des informations créées dans le contrôleur source sont transférées vers le contrôleur cible, et des informations additionnelles sont créées dans le contrôleur source puis transférées du contrôleur source vers le contrôleur cible.

Suivant une autre caractéristique, lesdites informations additionnelles créées dans le contrôleur source incluent des informations additionnelles destinées à permettre que l'identité du support radio utilisée par le contrôleur cible pour le calcul dudit code corresponde à l'identité du support radio utilisé par le contrôleur source pour transmettre ledit message au terminal mobile.

Suivant une autre caractéristique, lesdites informations additionnelles sont transférées du contrôleur source vers le contrôleur cible dans une même unité d'informations que lesdites informations créées par le contrôleur source.

Suivant une autre caractéristique, lesdites informations additionnelles sont transférées du contrôleur source au contrôleur cible dans une conteneur d'informations, dit premier conteneur d'informations, incluant ladite unité d'informations.

Suivant une autre caractéristique, lesdites informations additionnelles sont transférées dru contrôleur source au contrôleur cible dans un conteneur d'informations, dit deuxième conteneur d'informations, incluant ledit premier conteneur d'informations.

Suivant une autre caractéristique, lesdites informations additionnelles sont transférées du contrôleur source au contrôleur cible dans un message transmis entre contrôleur source et réseau coeur, puis dans un message transmis entre réseau coeur et contrôleur cible, ces messages incluant ledit deuxième conteneur d'informations.

Suivant une autre caractéristique, ladite unité d'informations correspond à une unité d'informations appelée «SRNS Relocation Info».

Suivant une autre caractéristique, ledit premier conteneur d'informations correspond a un conteneur d'informations appelé « RRC container».

Suivant une autre caractéristique, ledit deuxième conteneur d'informations correspond à un conteneur d'informations appelé « Source RNC to Target RNC Transparent Container ».

Suivant une autre caractéristique, lesdits messages incluant ledit deuxième conteneur d'informations correspondent à des messages RANAP («Radio Access Network Application Part»),

Suivant une autre caractéristique, ledit message RANAP transmis entre contrôleur source et réseau coeur est un message RELOCATION REQUIRED.

Suivant une autre caractéristique, ledit message RANAP transmis entre réseau coeur et contrôleur cible est un message RELOCATION REQUEST.

La présente invention a également pour objet, outre un tel procédé, notamment un contrôleur de réseau d'accès radio, et un système de radiocommunications mobiles, comportant des moyens pour mettre en oeuvre un tel procédé.

D'autres objets et caractéristiques de la présente invention apparaîtront à la lecture de la description suivante d'exemples de réalisation, faite en relation avec les dessins ci-annexés dans lesquels:
- la figure 1 rappelle l'architecture générale d'un système de radiocommunications mobiles, notamment de type UMTS,
- la figure 2 rappelle différentes structures de données transférées dans un système du type illustré sur la figure 1,
- la figure 3 est destinée à illustrer un procédé suivant l'art antérieur, pour la protection d'intégrité de message transmis dans le cas de « relocation » dans lequel l'UE est impliqué,
- la figure 4 est destinée à illustrer un exemple de procédé suivant l'invention,
- la figure 5 est destinée à illustrer un autre exemple de procédé suivant l'invention.

Un exemple de procédé suivant l'invention est illustré sur la figure 4, correspondant plus particulièrement, à titre d'exemple, comme la figure 3 décrite précédemment, au cas de « relocation » dans lequel l'UE est impliqué.

Une étape notée 10' indique qu'une procédure de «relocation» est commencée.

Dans une étape notée 20', le SRNC cible créée des informations RRC. L'unité d'informations RRC correspondante créée par le contrôleur cible inclut, outre les informations créées dans l'étape 20 de la figure 2, des informations additionnelles, comme il va maintenant être expliqué.

L'étape 20' inclut un calcul du MAC-I par le le SRNC cible. D'une manière générale, pour le calcul du MAC-I, le SRNC cible peut utiliser des paramètres de calcul tels que des paramètres de calcul qui lui sont communiqués par le SRNC source pendant la procédure de « relocation » et/ou des paramètres de calcul choisis par le SRNC cible et qui peuvent alors être inclus dans l'IE « Integrity protection mode info » de l'unité d'informations RRC créée dans l'étape 20'. D'une manière générale, des informations additionnelles relatives au MAC-I calculé par le SRNC cible peuvent être transférées du SRNC cible vers le SRNC source de diverses manières, par exemple dans ou avec une des unités d'informations telles que, dans cet exemple:
- une unité d'informations « RRC information Target RNC to source RNC »
- un conteneur d'informations « RRC container »,
- un conteneur d'informations « Target SRNC to Source SRNC transparent container »,
- un message RANAP.

On peut ainsi prévoir, par exemple dans ou avec les informations RRC telles que créées par le SRNC cible, ou dans le conteneur d'informations RRC contenant ces informations RRC, ou directement dans le message RANAP envoyé du source SRNC vers le CN, des informations additionnelles contenant le MAC-I calculé par le SRNC cible. Par exemple :
- un IE additionnel peut être prévu dans l'unité d'informations « RRC information Target RNC to source RNC », correspondant dans cet exemple à l'IE « Message Authentication Code »,
- un marqueur d'extension peut être prévu (suivant les notations habituelles selon les techniques de codage telles que ASN.1) à un endroit correspondant dans la séquence « RRC information Target RNC to source RNC » (pour le cas de récepteur qui n'utiliserait pas cette version de protocole),
- un marqueur d'extension peut être prévu (suivant les notations habituelles selon les techniques de codage telles que ASN.1) à un endroit correspondant dans la séquence «RRC container » (pour le cas de récepteur qui n'utiliserait pas cette version de protocole),
- un marqueur d'extension peut être prévu (suivant les notations habituelles selon les techniques de codage telles que ASN.1) à un endroit correspondant dans la séquence « Target RNC to Source RNC transparent container » (pour le cas de récepteur qui n'utiliserait pas cette version de protocole),

Par exemple, une extension de l'IE « Target RNC to Source RNC transparent container » du conteneur RANAP pourrait être définie, qui contiendrait un conteneur défini en RRC où ces informations additionnelles seraient ajoutées.

Une étape notée 30' correspond à l'envoi par le SRNC cible vers le CN, d'un message RANAP tel que le message « RELOCATION REQUEST ACKNOWLEDGE ». Ce message se différencie de celui envoyé à l'étape 30 de la figure 3 en ce qu'il comporte des informations additionnelles correspondant au MAC-I calculé par le contrôleur cible, ce qui a été noté sur la figure 4 « Relocation Request Acknowledge (target RNC to source RNC transparent container) + MAC-I», ces informations additionnelles pouvant être transférées vers le SRNC source par exemple de l'une ou l'autre des manières indiquées ci-dessus.

Une étape notée 40' correspond à l'envoi par le CN vers le SRNC source d'un message RANAP tel que le message «RELOCATION COMMAND » . Ce message se différencie de celui envoyé à l'étape 40 de la figure 3 en ce qu'il comporte des informations additionnelles correspondant au MAC-I calculé par le contrôleur cible, ce qui a été noté sur la figure 4 « Relocation Command (target RNC to source RNC transparent container) + MAC-I », ces informations additionnelles pouvant être transférées vers le SRNC source par exemple de l'une ou l'autre des manières indiquées ci-dessus.

Une étape notée 50' correspond à la constitution par le SRNC source du message RRC à transmettre à l'UE sur l'interface Uu. Dans cette étape, contrairement à l'étape 50 de la figure 3, aucun traitement correspondant à un calcul du MAC-I et à un décodage de l'unité d'informations RRC reçue, prélable à un tel calcul, n'est donc nécessaire, ce qui permet donc, notamment d'éviter les invconvénients mentionnés précédemment.

Une étape notée 60' correspond à l'envoi par le SRNC source vers l'UE d'un message RRC ainsi obtenu.

Suivant d'autres aspects de l'invention maintenant décrits, la présente invention permet également d'apporter des solutions aux problèmes suivants, également reconnus par le demandeur.

Un premier problème peut être exposé de la manière suivante. Comme exposé précédemment, le SRNC doit composer le message RRC à transmettre à l'UE sur l'interface Uu, notamment à partir de la séquence d'informations RRC qu'il reçoit du SRNC cible. Le message ainsi composé doit être d'une taille correspondant à un multiple de 8 bits. Le SRNC source doit alors rajouter des bits de bourrage (« RRC padding ») à la fin du message ainsi composé, pour la transmission du message RRC sur l'interface Uu. La quantité de bourrage à ajouter est fonction de la taille de la séquence « RRC information, target RNC to source RNC » reçue du SRNC cible. Or, du fait que le conteneur RRC contenant cette séquence contient également du bourrage (ou « container padding »), comme rappelé précédemment, il est a priori nécessaire que le SRNC source décode cette séquence pour connaître sa taille. Si l'objectif est toujours d'éviter au SRNC source d'avoir à décoder la séquence d'informations RRC reçue, d'autres solutions doivent alors être trouvées. On notera que ce premier problème peut aussi être considéré indépendamment du problème exposé précédemment.

Un exemple de solution à ce premier problème est le suivant. Le SRNC cible transmet au SRNC source des informations additionnelles destinées à permettre au SRNC source de déterminer la taille de la séquence « RRC information, target RNC to source RNC». Ces informations additionnelles peuvent être par exemple des informations relatives à la taille de la séquence « RRC information, target RNC to source RNC » elle-même, ou à la quantité de bourrage «container padding » ajoutée par le SRNC cible dans le conteneur RRC, ou à la taille de la séquence « Target RNC to source RNC transparent container» , ...etc.

Un autre exemple de solution à ce premier problème est le suivant. Le SRNC cible détermine la quantité de bourrage « RRC padding » qu'il faudrait pour transmettre le message RRC sur l'interface Uu (le SRNC cible doit notamment le déterminer lorsqu'il calcule le MAC-I, puisqu'un des paramètres d'entrée de l'algorithme d'intégrité est le paramètre MESSAGE, comme rappelé précédemment). Le SRNC cible prévoit ensuite suffisamment de bourrage « Container padding » pour que le SRNC source puisse utiliser la séquence « RRC container » telle quelle, en enlevant seulement si nécessaire des bits de bourrage « container padding » afin d'obtenir la longueur souhaitée pour la séquence « RRC Message », ce qui évite alors d'avoir à calculer le nombre de bits de bourrage, contrairement au cas où il faudrait rajouter des bits de bourrage.

D'autres exemples seraient bien entendu possibles.

Un deuxième problème peut être exposé de la manière suivante. Comme rappelé précédemment, l'identité du support radio ou RB utilisé pour transmettre un message RRC sur l'interface Uu est un des paramètres de calcul du MAC-I. Le MAC-I calculé est donc différent suivant le RB sur lequel le message est transmis. Or le SRNC cible peut choisir un RB différent de celui indiqué par le SRNC source dans une étape précédente. Des solutions doivent donc également être trouvées pour que le MAC-I calculé par le SRNC cible puisse être valablement utilisé par le SRNC source.

Un exemple de solution à ce deuxième problème est le suivant. Le SRNC cible calcule un MAC-I pour chaque RB possible sur lequel le message peut être transmis, et transmis les différents MAC-I calculés, avec les RB Id correspondants, au SRNC source.

Un autre exemple de solution à ce deuxième problème est le suivant. Le SRNC cible indique au SRNC source le RB Id pour lequel le MAC-I a été calculé, et sur lequel le message devrait être envoyé.

La présente invention propose également que le SRNC cible utilise, pour le calcul du MAC-I, le RB Id qui lui est indiqué par le SRNC source et qui correspond au RB Id sur lequel le SRNC source va transmettre le message RRC. La présente invention propose également que ce RB Id soit indiqué par le SRNC source au SRNC cible dans une unité d'informations RRC appelée « SRNS Relocation Information » transférée du SRNC source au SRNC cible via le réseau coeur pendant la procédure de « relocation ». Des messages RANAP tels que les messages RELOCATION REQUIRED (transmis entre SRNC source et CN) et RELOCATION REQUEST (transmis entre CN et SRNC cible) contiennent un IE correspondant à un conteneur d'informations appelé « Source RNC to target RNC transparent container», qui contient lui-même un IE correspondant à un conteneur d'informations appelé « RRC container », qui contient lui-même l'unité d'informations « SRNS Relocation Info ». Par exemple :
- un IE additionnel peut être prévu dans l'unité d'informations « SRNS Relocation Information », correspondant dans cet exemple à l'IE « RB Id »,
- un marqueur d'extension peut être prévu (suivant les notations habituelles selon les techniques de codage telles que ASN.1) à un endroit correspondant dans la séquence correspondante codée, notée «SRNS Relocation Information » (pour le cas de récepteur qui n'utiliserait pas cette version de protocole),

D'autres exemples seraient bien entendu possibles.

Un troisième problème peut être exposé de la manière suivante. Comme rappelé précédemment, le numéro de séquence RRC SN est un des paramètres de calcul du MAC-I. Le MAC-I calculé est donc différent suivant le numéro de séquence RRC SN du message transmis. Or le SRNC cible peut choisir un RRC SN différent de celui choisi par le SRNC source. Des solutions doivent donc également être trouvées pour que le MAC-I cacule par le SRNC cible puisse être valablement utilisé par le SRNC source.

Un exemple de solution à ce troisième problème est le suivant. Le SRNC cible calcule un MAC-I pour chaque RRC SN possible sur lequel le message peut être transmis, et transmet les différents MAC-I calculés, avec les RRC SN correspondants, au SRNC source.

Un autre exemple de solution à ce troisième problème est le suivant. Le SRNC cible indique au SRNC source le RRC SN pour lequel le MAC-I a été calculé, et qui devrait être transmis dans le message RRC via l'interface Uu vers le terminal mobile.

D'autres exemples seraient bien entendu possibles.

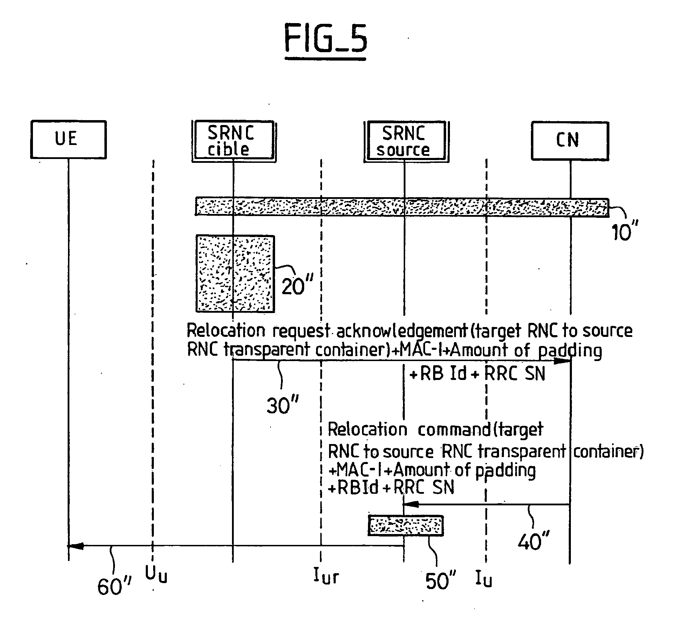

La figure 5 est destinée à illustrer un autre exemple de procédé suivant l'invention, qui diffère de celui illustré sur la figure 4 en ce qu'un transfert de telles autres informations additionnelles est prévu du contrôleur cible vers le contrôleur source, en plus des informations additionnelles relatives au MAC-I calculé) ces autres informations additionnelles incluent dans cet exemple :
- des informations additionnelles destinées à permettre au SRNC source de déterminer la taille de la séquence « RRC information, target RNC to source RNC », en l'occurrence des informations additionnelles notées « Amount of padding » relatives à la quantité de bourrage ajoutée par le contrôleur cible à une séquence d'informations RRC pour son transfert dans un conteneur RRC,
- des informations additionnelles, notées « RB Id », destinées à permettre que le code calculé par le contrôleur cible corresponde à l'identité du support radio utilisé pour transmettre ledit message au terminal mobile,
- des informations additionnelles, notées « RRC SN », destinées à permettre qu'un numéro de séquence contenu dans le message transmis au terminal mobile corresponde au numéro de séquence utilisé par le contrôleur cible pour caluler ledit code.

D'une manière générale, de telles autres informations additionnelles sont destinées à permettre que les opérations de constitution de message par le contrôleur source et de calcul de code par le contrôleur cible soient cohérentes.

Dans la figure 5, les étapes du procédé ont été notées 10", 20", 30", 40", 60".

L'étape 10" peut être similaire à l'étape 10'.

L'étape 20" peut être similaire à l'étape 20', à ceci près qu'elle peut inclure des traitements supplémentaires pour la communication au SRNC source des informations additionnelles supplémentaires, notées «Amount of padding », « RB Id », « RRC SN », en plus des informations additionnelles notées « MAC-I ».

D'une manière générale, de telles informations additionnelles supplémentaires, telles que celles notées ici «Amount of padding », « RB Id », « RRC SN », peuvent être transférées du SRNC cible vers le SRNC source de diverses manières, par exemple de l'une ou l'autre des manières indiquées précédemment pour le transfert des informations additionnelles relatives au « MAC-I ». Par exemple :
- des IE additionnels peuvent être prévus dans l'unité d'informations « RRC information Target RNC to source RNC », correspondant dans cet exemple aux IE « Message Authentication Code », « Amount of padding », «RB Id », « RRC SN »,
- un marqueur d'extension peut être prévu (suivant les notations habituelles selon les techniques de codage telles que ASN.1) à un endroit correspondant dans la séquence « RRC information Target RNC to source RNC » (pour le cas de récepteur qui n'utiliserait pas cette version de protocole),
- un marqueur d'extension peut être prévu (suivant les notations habituelles selon les techniques de codage telles que ASN.1) à un endroit correspondant dans la séquence « RRC container » (pour le cas de récepteur qui n'utiliserait pas cette version de protocole),
- un marqueur d'extension peut être prévu (suivant les notations habituelles selon les techniques de codage telles que ASN.1) à un endroit correspondant dans la séquence «Target RNC to Source RNC transparent container » (pour le cas de récepteur qui n'utiliserait pas cette version de Iprotocole).

Par exemple, une extension de l'IE «Target SRNC to Source SRNC transparent container » du conteneur RANAP pourrait être définie, qui contiendrait un conteneur défini en RRC où ces informations additionnelles seraient ajoutées.

L'étape notée 30" correspond à l'envoi par le SRNC cible vers le CN, d'un message RANAP tel que le message « RELOCATION REQUEST ACKNOWLEDGE » . Ce message se différencie de celui envoyé à l'étape 30 de la figure 3 en ce qu'il comporte des informations additionnelles correspondant à MAC-I, Amount of Padding, RB Id, RRC SN, ce qui a été noté sur la figure 5 « Relocation Request Acknowledge (target RNC to source RNC transparent container) + MAC-I + Amount of Padding + RB Id + RRC SN», ces informations additionnelles pouvant être transférées vers le SRNC source par exemple de l'une ou l'autre des manières indiquées précédemment .

L'étape notée 40" correspond à l'envoi par le CN vers le SRNS source, d'un message RANAP tel que le message «RELOCATION COMMAND» . Ce message se différencie de celui envoyé à l'étape 40 de la figure 3 en ce qu'il comporte des informations additionnelles correspondant à MAC-I, Amount of Padding, RB Id, RRC SN, ce qui a été noté sur la figure 5 « Relocation Command (target RNC to source RNC transparent container) + MAC-I + Amount of Padding + RB Id + RRC SN», ces informations additionnelles pouvant être transférées vers le SRNC source par exemple de l'une ou l'autre des manières indiquées précédemment.

L'étape 50" peut inclure, outre les traitements effectués dans l'étape 50', des traitements permettant de prendre en compte, pour la constitution du message par le SRNC source, les informations additionnelles supplémentaires «Amount of padding », « RB Id », « RRC SN », comme décrit précédemment.

L'étape 60" peut être similaire à l'étape 60'.

L'exemple de la figure 5 combine les solutions aux différents problèmes exposées précédemment, mais il serait bien sûr possible de les envisager séparément ou sous forme de combinaisons partielles.

L'invention n'est bien sûr pas limitée aux exemples décrits ci-dessus en relation avec les figures 4 et 5. Notamment :
- l'invention n'est pas limitée au cas de message RRC transmis à l'UE dans le cas de « relocation » dans lequel l'UE est impliqué,
- l'invention n'est pas limitée au cas où les paramètres à utiliser par l'UE (tels que les paramètres de calcul du MAC-I) changent dans le cas de changement de contrôleur de réseau d'accès radio serveur,
- l'invention n'est pas limitée aux exemples décrits ci-dessus d'informations et/ou de structures pour le transfert d'informations,
- l'invention n'est pas limitée au cas du système UMTS.

La présente invention a égaiement pour objet, outre un tel procédé, notamment une contrôleur de réseau d'accès radio, et un système de radiocommunications mobiles comportant des moyens pour mettre en oeuvre un tel procédé.

La réalisation particulière de tels moyens ne présentant pas de difficulté particulière pour l'homme du métier, de tels moyens ne nécessitent pas d'être décrits ici de manière plus détaillée que ce qui a été fait précédemment, par leur fonction.

## Revendications

1. Procédé pour la protection d'intégrité de messages transmis entre un terminal mobile et un contrôleur de réseau d'accès radio serveur dans un système de radiocommunications mobiles, procédé dans lequel un message transmis est protégé au moyen d'un code calculé en émission, procédé dans lequel, dans le cas de changement de contrôleur de réseau d'accès radio serveur, d'un contrôleur dit contrôleur source, vers un contrôleur dit contrôleur cible, un message transmis au terminal mobile par le contrôleur source, et destiné à re-transmettre au terminal mobile des informations créées dans le contrôleur cible puis transférées par le contrôleur cible au contrôleur source, est protégé au moyen d'un code calculé dans le contrôleur cible.

2. Procédé selon la revendication 1, dans lequel des informations additionnelles sont créées dans le contrôleur cible puis transférées du contrôleur cible vers le contrôleur source.

3. Procédé selon la revendication 2, dans lequel lesdites informations additionnelles incluent des informations additionnelles relatives au code calculé par le contrôleur cible.

4. Procédé selon l'une des revendications 2 ou 3, dans lequel lesdites informations additionnelles incluent des informations additionnelles destinées à permettre que les opérations de constitution de message par le contrôleur source et de calcul de code par le contrôleur cible soient cohérentes.

5. Procédé selon la revendication 4, dans lequel lesdites informations additionnelles incluent des informations additionnelles destinées à permettre au contrôleur source de déterminer la taille d'une séquence de bits reçue du contrôleur cible et correspondant auxdites informations créées par le contrôleur cible.

6. Procédé selon la revendication 5, dans lequel lesdites informations additionnelles indiquent la quantité de bourrage nécessaire pour transférer ladite séquence de bits dans un conteneur d'informations de taille donnée.

7. Procédé selon la revendication 4, dans lequel lesdites informations additionnelles incluent des informations additionnelles destinées à permettre que l'identité du support radio utilisée par le contrôleur cible pour le calcul dudit code corresponde à l'identité du support radio utilisé par le contrôleur source pour transmettre ledit message au terminal mobile.

8. Procédé selon la revendication 4, dans lequel lesdites informations additionnelles incluent des informations additionnelles destinées à permettre qu'un numéro de séquence contenu dans le message transmis au terminal mobile corresponde au numéro de séquence utilisé par le contrôleur cible pour calculer ledit code.

9. Procédé selon l'une des revendications 2 à 8, dans lequel lesdites informations additionnelles sont transférées du contrôleur cible vers le contrôleur source dans une même unité d'informations que lesdites informations créées par le contrôleur cible.

10. Procédé selon l'une des revendications 2 à 9, dans lequel lesdites informations additionnelles sont transférées du contrôleur cible au contrôleur source dans un conteneur d'informations, dit premier conteneur d'informations, incluant ladite unité d'informations.

11. Procédé selon l'une des revendications 2 à 10, dans lequel lesdites informations additionnelles sont transférées du contrôleur cible au contrôleur source dans un conteneur d'informations, dit deuxième conteneur d'informations, incluant ledit premier conteneur d'informations.

12. Procédé selon l'une des revendications 2 à 11, dans lequel lesdites informations additionnelles sont transférées du contrôleur cible au contrôleur source dans un message transmis entre contrôleur cible et réseau coeur, puis dans un message transmis entre réseau cour et contrôleur source, ces messages incluant ledit deuxième conteneur d'informations.

13. Procédé selon l'une des revendications 1 à 12, dans lequel ledit message transmis du contrôleur source au terminal mobile corresond à un message RRC (« Radio Resource Control »).

14. Procédé selon la revendication 9, dans lequel ladite unité d'informations correspond à une unité d'informations appelée « RRC information, target RNC to source RNC ».

15. Procédé selon la revendication 10, dans lequel ledit premier conteneur d'informations correspond à un conteneur d'informations appelé « RRC container ».

16. Procédé selon la revendication 11, dans lequel ledit deuxième conteneur d'informations correspond à un conteneur d'informations appelé « Target RNC to Source RNC Transparent Container ».

17. Procédé selon la revendication 12, dans lequel lesdits messages incluant ledit deuxième conteneur d'informations correspondent à des messages RANAP (« Radio Access Network Application Part »).

18. Procédé selon l'une des revendications 1 à 17, dans lequel lesdites informations sont destinées à communiquer au terminal mobile différents paramètres à utiliser sous le contrôle du contrôleur cible.

19. Procédé selon l'une des revendications 1 à 18, dans lequel ledit message RRC est un des messages : RADIO BEARER SETUP, RADIO BEARER RECONFIGURATION, RADIO BEARER RELEASE, TRANSPORT CHANNEL RECONFIGURATION, PHYSICAL CHANNEL RECONFIGURATION.

20. Procédé selon l'une des revendications 1 à 19, dans lequel ledit message RANAP transmis entre contrôleur cible et réseau coeur est un message RELOCATION REQUEST ACKNOWLEDGE.

21. Procédé selon l'une des revendications 1 à 20, dans lequel ledit message RANAP transmis entre réseau coeur et contrôleur source est un message RELOCATION COMMAND.

22. Procédé selon l'une des revendications 1 à 21, dans lequel ledit code est un code d'authentification de message, ou MAC-I (« Message Authentication Code »).

23. Procédé selon l'une des revendications 1 à 22, dans lequel, dans le cas de changement de contrôleur de réseau d'accès radio serveur, dudit contrôleur source vers ledit contrôleur cible, des informations créées dans le contrôleur source sont transférées vers le contrôleur cible, et dans lequel des informations additionnelles sont créées dans le contrôleur source puis transférées du contrôleur source vers le contrôleur cible.

24. Procédé selon la revendication 23, dans lequel lesdites informations additionnelles crées dans le contrôleur source incluent des informations additionnelles destinées à permettre que l'identité du support radio utilisée par le contrôleur cible pour le calcul dudit code corresponde à l'identité du support radio utilisé par le contrôleur source pour transmettre ledit message au terminal mobile.

25. Procédé selon l'une des revendications 23 ou 24, dans lequel lesdites informations additionnelles sont transférées du contrôleur source vers le contrôleur cible dans une même unité d'informations que lesdites informations créées par le contrôleur source.

26. Procédé selon l'une des revendications 23 à 25, dans lequel lesdites informations additionnelles sont transférées du contrôleur source au contrôleur cible dans un conteneur d'informations, dit premier conteneur d'informations, incluant ladite unité d'informations.

27. Procédé selon l'une des revendications 23 à 26, dans lequel lesdites informations additionnelles sont transférées du contrôleur source ou contrôleur cible dans un conteneur d'informations, dit deuxième conteneur d'informations, incluant ledit premier conteneur d'informations.

28. Procédé selon l'une des revendications 23 à 27, dans lequel lesdites informations additionnelles sont transférées du contrôleur source du contrôleur cible dans un message transmis du contrôleur source au réseau coeur, puis dans un message transmis du réseau coeur au contrôleur cible, ces messages incluant ledit deuxième conteneur d'informations.

29. Procédé selon la revendication 9, dans lequel ladite unité d'informations correspond à une unité d'informations appelée «SRNS Relocation Info»,

30. Procédé selon la revendication 26, dans lequel ledit premier conteneur d'informations correspond à un conteneur d'informations appelé «RRC container».

31. Procédé selon la revendication 27, dans lequel ledit deuxième conteneur d'informations correspond à un conteneur d'informations appelé « Source RNC to Target RNC Transparent Container».

32. Procédé selon la revendication 28, dans lequel lesdits messages incluant ledit deuxième conteneur d'informations correspondent à des messages RANAP (« Radio Access Network Application Part»).

33. Procédé selon la revendication 32, dans lequel ledit message RANAP transmis entre contrôleur source et réseau coeur est un message RELOCATION REQUIRED.

34. Procédé selon la revendication 32, dans lequel ledit message RANAP transmis entre réseau coeur et contrôleur cible est un message RELOCATION REQUEST.

35. Contrôleur de réseau d'accès radio ayant une fonction de contrôleur cible dans le cas de changement de contrôleur de réseau d'accès radio serveur, d'un contrôleur dit contrôleur source vers ledit cible, ledit contrôleur cible comportant des moyens pour calculer un code de protection d'intégrité d'un message transmis à un terminal mobile par le contrôleur source et destiné à re-transmettre au terminal mobile des informations crées dans le contrôleur cible puis transférées par le contrôleur cible au contrôleur source.

36. Contrôleur de réseau d'accès radio ayant une fonction de contrôleur source dons le cas de changement de contrôleur de réseau d'accès radio serveur, dudit contrôleur source vers un contrôleur dit contrôleur cible, ledit contrôleur source comportant des moyens pour indiquer ou contrôleur cible l'identité du support radio RB Id utilisé par le contrôleur source pour transmettre à un terminal mobile un message destiné à re-transmettre au terminal mobile des informations créées dans le contrôleur cible puis transférées par le contrôleur cible au contrôleur source.

37. Système de radiocommunications mobiles, comportant des moyens pour mettre en oeuvre un procédé selon l'une des revendications 1 à 34.

## Claims

1. A method of protecting the integrity of messages sent between a mobile terminal and a server radio access network controller in a mobile radio system, in which method a message sent is protected by a code calculated on sending and, in the event of a change of server radio access network controller from a source controller to a target controller, a message sent to the mobile terminal by the source controller, for forwarding to the mobile terminal information created in the target controller and: then transferred by the target controller to the source controller, is protected by a code calculated in the target controller.

2. A method according to claim 1, wherein additional information is created in the target controller and then transferred from the target controller to the source controller.

3. A method according to claim 2, wherein said additional information includes additional information relating to the code calculated by the target controller.

4. A method according to either claim 2 or claim 3, wherein said additional information include additional information intended to ensure that operations of message construction by the source controller and of code calculation by the target controller are mutually consistent.

5. A method according to claim 4, wherein said additional information includes additional information intended to enable the source controller to determine the size of a sequence of bits received from the target controller and corresponding to said information created by the target controller.

6. A method according to claim 5, wherein said additional information indicates the amount of padding needed to transfer said sequence orbits in an information container of given size.

7. A method according to claim 4, wherein said additional information includes additional information intended to ensure that the identity of the radio bearer used by the target controller to calculate said code the identity of the radio bearer used by the source controller to send said message to the mobile terminal.

8. A method according to claim 4, wherein said additional information includes additional information intended to ensure that a sequence number contained in the message sent to the mobile terminal matches the sequence number used by the target controller to calculate said code.

9. A method according to any one of claims 2 to 8, wherein said additional information is transferred from the target controller to the source controller in the same information unit as said information created by the target controller.

10. A method according to any one of claims 2 to 9, wherein said additional information is transferred from the target controller to the source controller in a first information container including said information unit.

11. A method according to any one of claims 2 to 10, wherein said additional information is transferred from the target controller to the source controller in a second information container including said first information container.

12. A method according to any one of claims 2 to 11, wherein said additional information is transferred from the target controller to the source controller in a message sent between the target controller and the core network and then in a message sent between the core network and the source controller, said messages including said second information container.

13. A method according to any one of claims 1 to 12, wherein said message sent from the source controller to the mobile terminal is a radio resource control (RRC) message.

14. A method according to claim 9, wherein said information unit is an RRC information, target RRC to source RRC information unit.

15. A method according to claim 10, wherein said first information container is an RRC in formation container.

16. A method according to claim 11, wherein said second information container is a target RNC to source RNC transparent information container.

17. A method according to claim 12, wherein said messages including said second information container are radio access network application part (RANAP) messages.

18. A method according to claim 1 to 17, wherein said information communicates to the mobile terminal parameters to be used under the control of the target controller.

19. A method according to any one of claims 1 to 18, wherein said RRC message is one of the following messages: RADIO BEARER SETUP RADIO BEAR RECONFIGURATION, RADIO BEARER RELEASE, TRANSPORT CHANNEL RECONFIGURATION, PHYSICAL CHANNEL RECONFIGURATION.

20. A method according to any one of claims 1 to 19, wherein said RANAP message sent between the target controller and the core network is a RELOCATION REQUEST ACKNOWLEDGE message.

21. A method according to any one of claims 1 to 20, wherein said RANAP message sent between the core network and the source controller is a RELOCATION COMMAND message.

22. A method according to any one of claims 1 to 21, wherein said code is a MAC-I message authentication code.

23. A method according to any one of claims 1 to 22, wherein, in the event of change of server radio access network controller from said source controller to said target controller information created in the source controller is transferred to the target controller and additional information is created in the source controller and then transferred from the source controller to the target controller.

24. A method according to claim 23, wherein said additional information created in the source controller includes additional information to ensure that the identity of the radio bearer used by the target controller to calculate said code matches the identity of the radio bearer used by the source controller to send said message to the mobile terminal.

25. A method according to either claim 23 or claim 24, wherein said additional information is transferred from the source controller to the target controller in the same information unit as said information created by the source controller.

26. A method according to any one of claims 23 to 25, wherein said additional information is transferred from the source controller to the target controller in a first information container including said information unit.

27. A method according to any one of claims 23 to 26, wherein said additional information is transferred from the source controller to the target controller in a second information container including said first information container.

28. A method according to any one of claims 23 to 27, wherein said additional information is transferred from the source controller to the target controller in a message sent from the source controller to the core network and then in a message sent from the core network to the target controller, said messages including said second information container.

29. A method according to claim 9, wherein said information unit is an SRNS relocation information unit.

30. A method according to claim 26, wherein said first information container is an RRC container.

31. A method according to claim 27, wherein said second information container is a source RNC to target RNC transparent container.

32. A method according to claim 28, wherein said messages including said second information container are radio access network application part (RANAP) messages.

33. A method according to claim 32, wherein said RANAP message sent between the source controller and the core network is a RELOCATION REQUIRED message.

34. A method according to claim 32, wherein said RANAP message sent between the core network and the target controller is a RELOCATION REQUEST message.

35. A radio access network controller having a target controller function in the event of a change of serving radio network controller from a controller referred to as source controller to said target controller, said target controller comprising means for calculating an integrity protection code of a message sent to the mobile terminal by the source controller, for forwarding to the mobile terminal information created in the target controller and then transferred by the target controller to the source controller.

36. A radio access network controller having a source controller function in the event of a change of serving radio network controllers from said source controller to a controller referred to as target controller, said source controller comprising means for indicating to the target controller the radio bearer identity RB Id used by the source controller to send to a mobile terminal a message for forwarding to the mobile terminal information created in the target controller and then transferred by the target controller to the source controller.

37. A mobile radio system including means for implementing a method according to any of claims 1 to 34.

## Patentansprüche

1. Verfahren zum Schutz der Integrität von zwischen einem Mobilendgerät und einem Funkzugangsnetzwerk-Server-Controller in einem Mobilfunkkommunikationssystem übertragenen Nachrichten, wobei eine im Rahmen des Verfahrens übertragene Nachricht mittels eines im Sendebetrieb berechneten Codes geschützt wird, wobei, im Rahmen des Verfahrens, im Fall eines Wechsels des Funkzugangsnetzwerk-Server-Controllers von einer sogenannten Quellsteuerung zu einer sogenannten Zielsteuerung, eine von der Quellsteuerung an das Mobilendgerät übertragene Nachricht, welche dazu bestimmt ist, in der Zielsteuerung erzeugte und anschließend von der Zielsteuerung an die Quellsteuerung weitergeleitete Informationen an das Mobilendgerät weiterzuleiten, anhand eines in der Quellsteuerung berechneten Codes geschützt wird.

2. Verfahren nach Anspruch 1, wobei zusätzliche informationen in der Zielsteuerung erzeugt und anschließend von der Zielsteuerung an die Quellsteuerung weitergeleitet werden.

3. Verfahren nach Anspruch 2, wobei die besagten zusätzlichen Informationen zusätzliche Informationen in Bezug auf den von der Zielsteuerung berechneten Code enthalten.

4. Verfahren nach einem der Ansprüche 2 oder 3, wobei die besagten zusätzlichen Informationen zusätzliche Informationen enthalten, welche für die Gewährleistung der Kohärenz der durch die Quellsteuerung ausgeführten Nachrichtenerstellungsoperationen und der durch die Zielsteuerung ausgeführten Codeberechnungsoperationen bestimmt sind.

5. Verfahren nach Anspruch 4, wobei die besagten zusätzlichen Informationen zusätzliche Informationen enthalten, welche für die Ermittlung der Größe einer von der Zielsteuerung empfangenen Bitfolge, welche den besagten von der Zielsteuerung erzeugten Informationen entspricht durch die Quellsteuerung bestimmt sind.

6. Verfahren nach Anspruch 5, wobei die besagten zusätzlichen Informationen die für die Übertragung der besagten Bitfolge in einem Informationscontainer einer gegebenen Größe erforderliche Stopfbitmenge angeben.

7. Verfahren nach Anspruch 4, wobei die besagten zusätzlichen informationen zusätzliche informationen enthalten, welche dazu bestimmt sind, zu gewährleisten dass die identität des von der Zielsteuerung für die Berechnung des besagten Codes verwendeten Funkträgers der identität des von der Quellsteuerung für die Übertragung der besagten Nachricht an das Mobilendgerät benutzten Funkträgers entspricht.

8. Verfahren nach Anspruch 4, wobei die besagten zusätzlichen Informationen zusätzliche Informationen enthalten, welche dazu bestimmt sind, zu gewährleisten, dass eine in der an das Mobilendgerät übertragene Nachricht enthaltene Sequenznummer der von der Zielsteuerung zur Berechnung des besagten Codes verwendeten Sequenznummer entspricht.

9. Verfahren nach einem der Ansprüche 2 bis 8, wobei die besagten zusätzlichen Informationen in einer selben Informationseinheit wie die besagten von der Zielsteuerung erzeugten Informationen von der Zielsteuerung an die Quellsteuerung weitergeleitet werden.

10. Verfahren nach einem der Anspruche 2 bis 9, wobei die besagten zusätzlichen Informationen in einem Informationscontainer, dem sogenannten ersten Informationscontainer, welcher die besagte Informationseinheit enthält, von der Zielsteuerung an die Quellsteuerung weitergeleitet werden.

11. Verfahren nach einem der Ansprüche 2 bis 10, wobei die besagten zusätzlichen informationen in einem Informationscontainer, dem sogenannten zweiten Informationscontainer, welcher den besagten ersten Informationscontainer enthält, von der Zielsteuerung an die Quellsteuerung weitergeleitet werden.

12. Verfahren nach einem der Ansprüche 2 bis 11, wobei die besagten zusätzlichen Informationen in einer zwischen der Zielsteuerung und dem Kernnetzwerk übertragenen Nachricht und anschließend in einer zwischen dem Kernnetzwerk und der Quellsteuerung übertragenen Nachricht von der Zielsteuerung an die Quellsteuerung weitergeleitet werden, wobei diese Nachrichten den besagten zweiten Informationscontainer enthalten.

13. Verfahren nach einem der Ansprüche 1 bis 12, wobei die besagte von der Quellsteuerung an das Mobilendgerät übertragene Nachricht einer RRC-Nachricht ("Radio Resource Control") entspricht.

14. Verfahren nach Anspruch 9, wobei die besagte Informationseinheit einer sogenannten "RRC information, target RNC to source RNC"-Informationseinheit entspricht.

15. Verfahren nach Anspruch 10, wobei der besagte erste Informationscontainer einem sogenannten "RRC Container"-Informationscontainer entspricht.

16. Verfahren nach Anspruch 11, wobei der besagte zweite Informationscontainer einem sogenannten "Target RNC to Source RNC Transparent Container-Informationcontainer entspricht.

17. Verfahren nach Anspruch 12, wobei die besagten Nachrichten, welche den besagten zweiten Informationscontainer enthalten, RANAP-Nachrichten ("Radio Access Network Application Part") entsprechen.

18. Verfahren nach einem der Ansprüche 1 bis 17, wobei die besagten Nachrichten für die Kommunikation von verschiedenen unter der Kontrolle der Zielsteuerung zu benutzenden Parameter an das Mobilendgerät bestimmt sind.

19. Verfahren nach einem der Ansprüche 1 bis 18, wobei die besagte RRC-Nachricht eine der folgenden Nachrichten ist: RADIO BEARER SETUP, RADIO BEARER RECONFIGURATION, RADIO BEARER RELEASE, TRANSPORT CHANNEL RECONFIGURATION, PHYSICAL CHANNEL RECONFIGURATION.

20. Verfahren nach einem der Ansprüche 1 bis 19, wobei die besagte zwischen der Zielsteuerung und dem Kernnetzwerk übertragene RANAP-Nachricht eine RELOCATION REQUEST ACKNOWLEDGE-Nachricht ist.

21. Verfahren nach einem der Ansprüche 1 bis 20, wobei die besagte zwischen dem Kernnetzwerk und der Quellsteuerung übertragene RANAP-Nachricht eine RELOCATION COMMAND-Nachricht ist.

22. Verfahren nach einem der Ansprüche 1 bis 21, wobei der besagte Code ein Nachrichtenauthentifizierungscode oder MAC-1 ("Message Authentication Code") ist.

23. Verfahren nach einem der Ansprüche 1 bis 22, wobei im Fall des Wechsels des Funkzugangsnetzwerk-Server-Controllers von der besagten Quellsteuerung zu der besagten Zielsteuerung, in der Quellsteuerung erzeugte Informationen an die Zielsteuerung weitergeleitet werden, und wobei zusätzliche Informationen in der Quellsteuerung erzeugt und anschließend von der Quellsteuerung an die Zielsteuerung weitergeleitet werden.

24. Verfahren nach Anspruch 23, wobei die besagten in der Quellsteuerung erzeugten zusätzlichen Informationen zusätzliche Informationen umfassen, welche dazu bestimmt sind, zu gewährleisten, dass die identität des von der Zielsteuerung für die Berechnung des besagten Codes verwendeten Funkträgers der Identität des von der Quellsteuerung für die Übertragung der besagten Nachricht an das Mobilendgerat verwendeten Funkträgers entspricht.

25. Verfahren nach einem der Ansprüche 23 oder 24, wobei die besagten zusätzlichen Informationen in einer selben Informationseinheit wie die besagten von der Quellsteuerung erzeugten Informationen von der Quellsteuerung an die Zielsteuerung weitergeleitet werden.

26. Verfahren nach einem der Ansprüche 23 bis 25, wobei die besagten zusätzlichen Informationen in einem Informationscontainer, dem sogenannten ersten Informationscontainer, welcher die besagte Informationseinheit enthält von der Quellsteuerung an die zielsteuerung weitergeleitet werden.

27. Verfahren nach einem der Ansprüche 23 bis 26, wobei die besagten zusätzlichen Informationen in einem Informationscontainer dem sogenannten zweiten Informationscontainer, welcher den besagten ersten Informationscontainer enthält, von der Quellsteuerung an die Zielsteuerung weitergeleitet werden.

28. Verfahren nach einem der Ansprüche 23 bis 27, wobei die besagten zusätzlichen Informationen in einer von der Quellsteuerung an das Kernnetzwerk übertragenen Nachricht und anschließend in einer von dem Kernnetwerk an die Zielsteuerung übertragenen Nachricht von der Quellsteuerung an die Zielsteuerung weitergeleitet werden, wobei diese Nachrichten den besagten zweiten Informationscontainer enthalten.

29. Verfahren nach Anspruch 9, wobei die besagte Informationseinheit einer sogenannten "SRNS Relocation Info"-Informationseinheit entspricht.

30. Verfahren nach Anspruch 26, wobei der besagte erste Informationscontainer einem sogenannten "RRC-Container"-Informationscontainer entspricht.

31. Verfahren nach Anspruch 27, wobei der besagte zweite Informationscontainer einem sogenannten "Source RNC to Target RNC Transparent Container"-Informationscontainer entspricht.

32. Verfahren nach Anspruch 28, wobei die besagten Nachrichten, welche den besagten zweiten Informationscontainer enthalten, RANAP-Nachrichten ("Radio Access Network Application Part") entsprechen.

33. Verfahren nach Anspruch 32, wobei die besagte zwischen der Quellsteuerung und dem Kernnetzwerk übertragene RANAP-Nachricht eine RELOCATION REQUIRED-Nachricht ist.

34. Verfahren nach Anspruch 32, wobei die besagte zwischen dem Kernnetzwerk und der Zielsteuerung übertragene RANAP-Nachricht eine RELOCATION REQUEST-Nachricht ist.

35. Funkzugangsnetzwerksteuerungvorrichtung mit einer Zielsteurungsfunktion im Fall des Wechsels des Funkzugangsnetzwerk-Server-Controllers von einer sogenannten Quellsteuerung zu der besagten Zielsteuerung, wobei die besagte Zielsteuerung Mittel zum Berechnen eines Integritätsschutzcodes einer von der Quellsteuerung an ein Mobilendgerät übertragenen Nachricht umfasst und dazu bestimmt ist, in der Zielsteuerung erzeugte und anschließend von der Zielsteuerung an die Quellsteuerung übertragene Informationen an das Mobilendgerät weiterzuleiten.

36. Funkzugangsnetzwerksteuerungsvorrichtung mit einer Quellsteuerungfunktion im Fall des Wechsels des Funkzugangsnetzwerk-Server-Controllers von der besagten Quellsteuerung zu einer sogenannten Zielsteuerung, wobei die besagte Quellsteuerung Mittel umfasst, um der Zielsteuerung die Identität des von der Quellsteuerung für die Übertragung einer Nachricht, welche dazu bestimmt ist, in der Zielsteuerung erzeugte und anschließend von der Zielsteuerung an die Quellsteuerung Übertragene Informationen an das Mobilendgerät weiterzuleiten, verwendeten Funkträgers, RB Id, mitzuteilen,

37. Mobilfunkkommunikationssystem mit Mitteln zur Implementierung eines Verfahrens nach einem der Ansprüche 1 bis 34.
